# EUROPÄISCHE PATENTSCHRIFT

(11) **EP 1 784 349 B1**
(45) Veröffentlichungstag und Bekanntmachung des Hinweises auf die Patenterteilung: **28.11.2007**
(21) Anmeldenummer: 05792220.5
(22) Anmeldetag: 24.08.2005
(51) Int. Cl.: B65G 1/02, A47B 57/08

(54) **LAGERREGAL**
STORAGE RACK
RAYONNAGE DE STOCKAGE

(30) Priorität: 26.08.2004 DE 102004042061
(43) Veröffentlichungstag der Anmeldung: 16.05.2007
(73) Patentinhaber: HÄNEL GMBH & CO.KG, 74177 Bad Friedrichshall (DE)
(72) Erfinder: HÄNEL, Karl-Bruno, 74177 Bad Friedrichshall (DE)
(74) Vertreter: Preissner, Nicolaus
(86) Internationale Anmeldenummer: PCT/EP2005/054168
(87) Internationale Veröffentlichungsnummer: WO 2006/021571

(56) Entgegenhaltungen:
- EP-A- 0 722 894
- GB-A- 972 513
- US-A- 3 023 910

## Beschreibung

Die Erfindung betrifft ein Lagerregal mit einer Vielzahl von übereinanderliegenden und beabstandeten Auflagestegen, die paarweise an sich gegenüberliegenden Seitenwänden zur Aufnahme von plattenförmigen Lagergutträgern für Lagergut angeordnet sind, wobei die Lagergutträger mittels einer Transportvorrichtung Lagerplätzen in dem Lagerregal zustellbar und entnehmbar sind, wobei die Auflagestege mäanderförmig in ein Metallblech der Seitenwände eingepresst sind, und wobei die Seitenwände an vertikal verlaufenden Regalständern befestigt sind.

Derartige Lagerregale werden verwendet, um Lagergut mit unterschiedlicher Höhe automatisch und platzoptimiert in einem Lagerregal einzulagern und zu entnehmen.

In der EP 0 722 894 A1 ist ein Lagerregal mit zwei Lagerregaltürme und einer zwischen diesen angeordneten Transportvorrichtung beschrieben. Die Transportvorrichtung weist eine Plattform auf, mit der Lagergutträger Lagerplätzen zustellbar oder entnehmbar sind. Die Plattform wird zwischen einer Beschickungsstelle und den Lagerplätzen bewegt. Die Lagergutträger mit darauf gelagertem Lagergut werden an der Beschickungsstelle auf dieser Plattform abgesetzt.

Die Auflagestege, auf denen die Lagergutträger geführt und abgestützt werden, sind in die Seitenwände integriert. Die aus Metallblech bestehenden Seitenwände sind zur Bildung der Auflagestege mäanderförmig geformt und mit Vertikalständern verschweisst.

Derartige Lagerregale weisen eine beträchtliche Höhe auf. Üblicherweise werden mehrere Seitenwandelemente mit integrierten Auflagestegen mittels Schweissverbindungen an den Regalständern des Lagerregals befestigt. Die Herstellung der Schweissverbindungen kann dazu führen kann, dass die Seitenwandelemente und somit die Auflagestege nicht optimal ausgerichtet sind, wodurch sich ein erschwertes Herein- und Herausschieben der Lagergutträger ergibt.

Für eine automatisierte Zuführung der Lagergutträger ist jedoch eine exakte Positionierung der Auflagestege notwendig. Eine nicht exakte Positionierung der Auflagestege würde bei der Zuführung von Lagergutträgern, die häufig mit grossen Lasten bestückt sind, zu einem Verkanten führen und eine Einlagerung des Lagergutträgers erschweren oder unmöglich machen.

Aufgabe der Erfindung ist es deshalb, ein Lagerregal anzugeben, bei dem eine exakte Positionierung der Auflagestege sichergestellt ist.

Zur Lösung diese Aufgabe wird bei einem gattungsgemässen Lagerregal vorgeschlagen, dass die Regalständer horizontal abragende Zapfen aufweisen, die in Hohlräume der Auflagestege eingreifen.

Die Erfindung basiert auf dem Gedanken, dass zur exakten Befestigung der Seitenwände an den Regalständern eine Positionierung der Seitenwände an den Regalständern erforderlich ist. Erfindungsgemäss weisen die Regalständer Zapfen auf, die derart von den Regalständern abragen, dass sie in die mäanderförmig ausgestalteten Hohlräume der Auflagestege eingreifen. Die Zapfen lassen sich exakt an den Regalständern positionieren, so dass bei einem Verbinden der Seitenwand mit den Regalständern eine exakte Positionierung der Auflagestege ermöglicht wird. Ein weiterer Vorteil ergibt sich dadurch, dass durch die horizontal abragenden Zapfen die Traglast der Auflagestege erhöht wird, wodurch sich eine erhöhte Traglast der Lagergutträger ergibt.

Vorteilhafte Ausgestaltungen der Erfindung ergeben sich aus den Unteransprüchen.

In einer vorteilhaften Ausgestaltung der Erfindung weisen die Zapfen einen Aussendurchmesser auf, der im Wesentlichen einem Innenabstand der Auflagestege entspricht. Somit lassen sich die Seitenwände mit den integrierten Auflagestegen einfach auf die Zapfen an den Regalständern aufsetzen und mittels Schweissverbindungen an den Regalständern fixieren.

In einer weiteren vorteilhaften Ausgestaltung sind die Zapfen von sich gegenüberliegenden Regalständern in einer Horizontalebene zueinander ausgerichtet. Dadurch ist eine einfache Ausrichtung der Auflagestege zueinander realisierbar. Ein horizontaler Versatz von sich gegenüberliegenden Auflagestegen würde zu einer Neigung der Lagergutträger führen, was zu einem Verrutschen des Lagerguts auf den Lagergutträgern bewirken könnte. Eine derartige Neigung der Lagergutträger wird durch die Zapfen an den Regalständern vermieden.

In einer weiteren vorteilhaften Ausgestaltung sind die Zapfen mittels einer Presspassung in den Regalständern fixiert. Dies ermöglicht eine einfache Einbringung der Zapfen in die Regalständer. Alternativ können die Zapfen auch in ein Gewinde in den Regalständern eingeschraubt werden.

Besonders vorteilhaft ist es, wenn die Zapfen in die Regalständer eingeschossen werden. Dazu ist es erforderlich, an den entsprechenden Positionen der Regalständer Bohrungen anzubringen, die ein kleineres Mass aufweisen, als der Aussendurchmesser der Zapfen. Die Zapfen werden in die vorgefertigten Bohrungen eingeschossen, wodurch sich eine einfache Herstellung der Regalständer mit den Zapfen erreichen lässt.

Die Erfindung wird nachfolgend unter Bezugnahme auf die beigefügten schematischen Zeichnungen anhand einer bevorzugten Ausführungsform beispielhaft erläutert. Es zeigen:
- Fig. 1: eine perspektivische Ansicht eines erfindungsgemässen Lagerregals;
- Fig. 2: eine Schnittdarstellung durch ein Lagerregal gemäss Fig. 1;
- Fig. 3: eine Draufsicht auf alternative Zapfenformen.

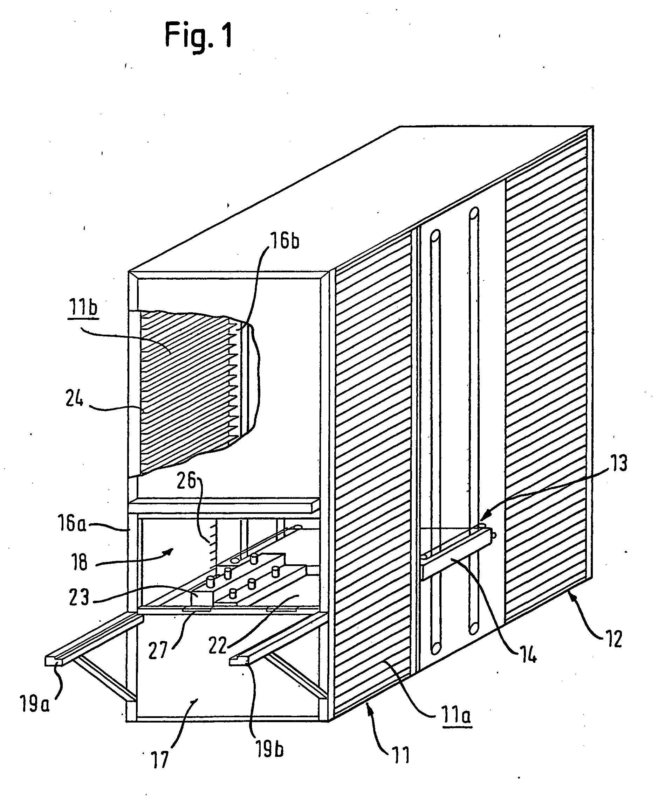

Fig. 1 zeigt ein erfindungsgemässes Regalsystem, das zwei mit Abstand zueinander angeordnete Lagerregale 11, 12 aufweist. Zwischen den Lagerregalen 11, 12 ist eine Transportvorrichtung 13 vorgesehen. Die Transportvorrichtung 13 umfasst eine Plattform 14, die mittels eines Antriebssystems in dem Lagerregal positionierbar ist. Die Lagerregale 11, 12 weisen jeweils parallel zueinander ausgerichtete Seitenwände 11a, 11 b auf. Die Seitenwände 11a, 11b bestehen aus mehreren Elementen, die an beabstandeten vertikalen Regalständern 16a und 16b mittels Punktschweissverbindungen befestigt sind.

An der Stirnseite 17 des Lagerregals 11 ist eine Beschickungsstelle 18 vorgesehen, an der parallel zueinander ausgerichtete, nach vorne abragende Auflagearme 19a, 19b zur Abstützung eines Lagergutträgers angeordnet sind. Über die Beschickungsstelle 18 können die Lagergutträger 22 mit Lagergut 23 ein- oder ausgelagert werden.

Der Lagergutträger 22 weist Handgriffe 27 auf. Weiter ist eine Höhenmesseinrichtung 26 vorgesehen, um die Höhe des einzulagernden Lagergutes 23 zu bestimmen und somit eine platzoptimierte Einlagerung zu ermöglichen.

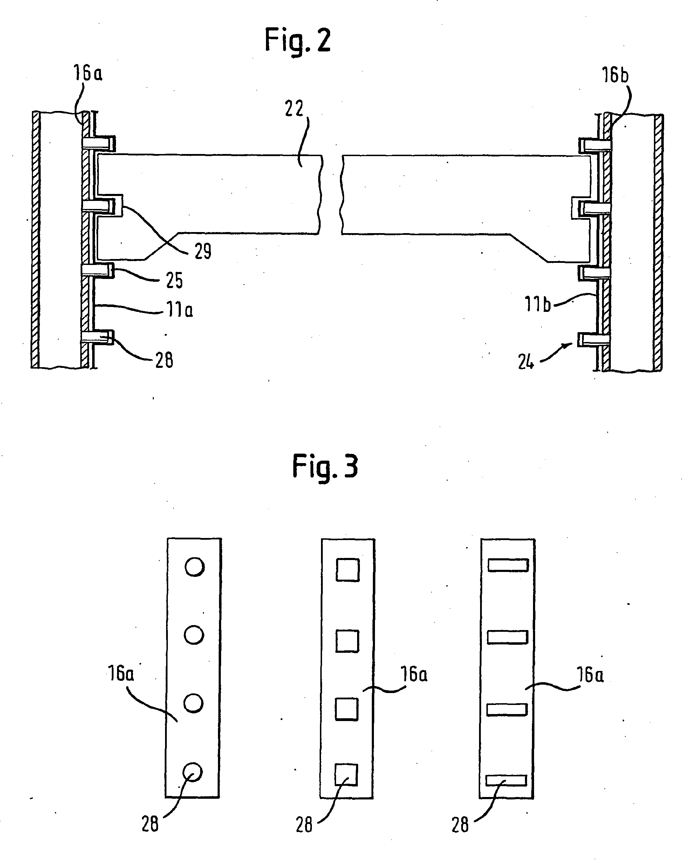

Fig. 2 zeigt eine Schnittdarstellung durch die an der Stirnseite des Lagerregals 11 angeordneten Regalständer 16a und den daran befestigten Seitenwänden 11a, 11b. Die Seitenwände 11a, 11 b sind aus Metallblech hergestellt und weisen mäanderförmig eingepresste Auflagestege 24 auf. Auf diesen Auflagestegen 24 werden die Lagergutträger 22 geführt und abgestützt. Die mäanderförmig ausgebildeten Auflagestege 24 bilden Hohlräume 25 aus, die nach aussen zu den Regalständern 16a, 16b ausgerichtet sind.

An den Regalständern 16a, 16b sind in einem vorgegebenen Abstand an entsprechenden Positionen Zapfen 28 befestigt, die in Horizontalrichtung abragen. Vorzugsweise wird dazu eine Presspassung verwendet. Dazu werden in den Regalständern 16a, 16b Bohrungen eingebracht, in die die entsprechend vorgefertigten Zapfen 28 eingeschossen werden. Nachdem die Zapfen 28 in die Regalständern 16a, 16b an entsprechenden Positionen angebracht sind, wird die Seitenwand 11 a, 11 b mit den integrierten Auflagestegen 24 auf den Regalständern 16a, 16b aufgesetzt. Dabei werden die Hohlräume 25 der Auflagestege 24 auf die Zapfen aufgesetzt, so dass sich eine exakte Positionierung der Seitenwände 11a, 11b an den Regalständern 16a, 16b ergibt. Nachdem die Seitenwände 11a, 11 b exakt auf den Zapfen 28 positioniert sind, wird die Seitenwand mittels Punktschweissverbindungen an den Regalständern 16a, 16b befestigt.

Je nach Ausgestaltung der Auflagestege 24 können die Zapfen 28 unterschiedliche Zapfenquerschnitte aufweisen. In Fig. 3 sind mehrere Regalständer 16a mit verschiedenen Zapfenquerschnitten dargestellt.

Der in Fig. 2 gezeigte Lagergutträger 22 ist zwischen zwei gegenüberliegenden Regalständern 16a, 16b aufgenommen. Der Lagergutträger 22 weist eine mittige Führungsnut 29 auf, so dass der Lagergutträger 22 auf zwei übereinander angeordneten Auflagestegen 24 geführt wird. Durch die Verwendung von zwei Auflagestegen 24 pro Seite ergibt sich eine höhere Tragfähigkeit für den Lagergutträger 22. Die Tragfähigkeit für den Lagergutträger 22 wird darüber hinaus auch durch die Verwendung der Zapfen 28 erhöht, da die Auflagestege 24 eine höhere Scherkraft aufnehmen können. Eine Erhöhung der Traglast ist zwar auch durch eine stärkere Dimensionierung der Seitenwände 11a, 11b möglich. Dickere Seitenwände würden jedoch das Gewicht des Lagerregals erhöhen und damit die Lagerkapazität des Lagerregals herabsetzen.

Die Verwendung der zusätzlichen Führungsnut 29 ermöglicht es, die Lagergutträger 22 auch an Zwischenpositionen im Lagerregal 11 zu positionieren, wodurch sich eine besonders platzoptimierte Einlagerung ergibt. Diese besonders effektive Einlagerung erfordert wiederum, dass die Auflagestege 24, auf denen der Lagergutträger 22 geführt wird, besonders exakt positioniert sind. Dies wird durch die Verwendung der erfindungsgemässen Zapfen 28 gewährleistet, die eine exakte Ausrichtung der Auflagestege 24 bewirkt.

Somit wird durch die Verwendung der erfindungsgemässen Zapfen 28 sichergestellt, dass die Auflagestege 24 an den vorgesehenen Positionen im Lagerregal positioniert werden und gleichzeitig eine Erhöhung der Tragfähigkeit erreicht wird.

### Bezugszeichenliste

- 11: Lagerregal
- 11 a, b: Seitenwand
- 12: Lagerregal
- 13: Transportvorrichtung
- 14: Plattform
- 16 a, b: Regatständer
- 17: Stirnseite
- 18: Beschickungsstelle
- 19 a, b: Auflagearme

- 22: Lagergutträger
- 23: Lagergut
- 24: Auflagestege
- 25: Hohlraum
- 26: Höhenmesseinrichtung
- 27: Handgriffe
- 28: Zapfen
- 29: Führungsnut

## Patentansprüche

1. Lagerregal (11, 12) mit einer Vielzahl von übereinanderliegenden und beabstandeten Auflagestegen (24), die paarweise an sich gegenüberliegenden Seitenwänden (11a, 11 b) zur Aufnahme von plattenförmigen Lagergutträgern (22) für Lagergut (23) angeordnet sind, wobei die Lagergutträger (22) mittels einer Transportvorrichtung (13) Lagerplätzen in dem Lagerregal (11, 12) zustellbar und entnehmbar sind, wobei die Auflagestege (24) mäanderförmig in ein Metallblech der Seitenwände (11a, 11b) eingepresst sind, und wobei die Seitenwände (11a, 11b) an vertikal verlaufenden Regalständern (16a, 16b) befestigt sind, **dadurch gekennzeichnet, dass** die Regalständer (16a, 16b) horizontal abragende Zapfen (28) aufweisen, die in Hohlräume (25) der Auflagestege (24) eingreifen.

2. Lagerregal nach Anspruch 1, **dadurch gekennzeichnet, dass** die Zapfen (28) einen Aussendurchmesser aufweisen, der im wesentlichen einem Innenabstand der Auflagestege (24) entspricht.

3. Lagerregal nach Anspruch 1 oder 2, **dadurch gekennzeichnet, dass** die Zapfen (28) von sich gegenüberliegenden Regalständern (16a, 16b) in Horizontalrichtung zueinander ausgerichtet sind.

4. Lagerregal nach einem der Ansprüche 1 bis 3, **dadurch gekennzeichnet, dass** die Zapfen (28) mittels einer Presspassung in den Regalständern (16a, 16b) fixiert sind.

5. Lagerregal nach einem der Ansprüche 1 bis 3, **dadurch gekennzeichnet, dass** die Zapfen (28) über ein Gewinde in die Regalständer (16a, 16b) einschraubbar sind.

6. Lagerregal nach einem der Ansprüche 1 bis 4, **dadurch gekennzeichnet, dass** die Zapfen (28) in die Regalständern (16a, 16b) eingeschossen sind.

## Claims

1. A storage rack (11, 12) comprising a plurality of stacked supporting ledges (24) each spaced away from each other and arranged in pairs on facing sidewalls (11 a, 11 b) for receiving plate-type carriers (22) for stored articles (23), storage and retrieval of the carriers (22) in supporting ledges (24) in the storage rack (11, 12) being provided by means of a transport device (13), the supporting ledges (24) being a snaked press fit in a sheet metal of the sidewalls (11 a, 11 b) and the sidewalls (11a, 11b) secured to upright rack stanchions (16a, 16b), **characterized in that** the rack stanchions (16a, 16b) comprise horizontally protruding pegs (28) engaging cavities (25) in the supporting ledges (24).

2. The storage rack as set forth in claim 1, **characterized in that** the pegs (28) comprise an outer diameter which substantially corresponds to the inner spacing of the supporting ledges (24).

3. The storage rack as set forth in claim 1 or 2, **characterized in that** the pegs (28) are aligned facing each other in a horizontally plane from facing rack stanchions (16a, 16 b).

4. The storage rack as set forth in any of the claims 1 to 3, **characterized in that** the pegs (28) are fixed in place by means of a press fit in the rack stanchions (16a, 16b).

5. The storage rack as set forth in claims 1 to 3, **characterized in that** the pegs (28) can also be screwed into a thread in the rack stanchions (16a, 16b).

6. The storage rack as set forth in any of the claims 1 to 4, **characterized in that** the pegs (28) are gunned into the rack stanchions (16a, 16 b).

## Revendications

1. Rayonnage de stockage (11, 12) comportant une multitude de barrettes d'appui (24) situées à distance les unes au-dessus des autres qui sont agencées par paire sur des parois latérales opposées (11a, 11b) pour recevoir des supports de produits de stockage (22) en forme de plaque destinés à des produits de stockage (23), les supports de produits de stockage (22) pouvant être approchés et enlevés d'emplacements de stockage dans le rayonnage de stockage (11, 12) au moyen d'un dispositif de transport (13), les barrettes d'appui (24) étant enfoncées à la presse en forme de méandres dans une tôle métallique des parois latérales (11a, 11 b), et les parois latérales (11a, 11 b) étant fixées sur des montants de rayonnage (16a, 16b) s'étendant verticalement, **caractérisé en ce que** les montants de rayonnage (16a, 16b) comprennent des tenons (28) dépassant horizontalement, qui s'engagent dans des cavités (25) des barrettes d'appui (24).

2. Rayonnage de stockage selon la revendication 1, **caractérisé en ce que** les tenons (28) présentent un diamètre extérieur qui correspond sensiblement à une distance intérieure des barrettes d'appui (24).

3. Rayonnage de stockage selon la revendication 1 ou 2, **caractérisé en ce que** les tenons (28) de montants de rayonnage opposés (16a, 16b) sont orientés les uns vers les autres en direction horizontale.

4. Rayonnage de stockage selon l'une des revendications 1 à 3, **caractérisé en ce que** les tenons (28) sont fixés dans les montants de rayonnage (16a, 16b) par ajustement serré.

5. Rayonnage de stockage selon l'une des revendications 1 à 3, **caractérisé en ce que** les tenons (28) sont susceptibles d'être vissés dans les montants de rayonnage (16a, 16b) via un pas de vis.

6. Rayonnage de stockage selon l'une des revendications 1 à 4, **caractérisé en ce que** les tenons (28) sont enfoncés à force dans les montants de rayonnage (16a, 16b).
